# EUROPEAN PATENT APPLICATION

(11) **EP 2 161 812 A1**
(43) Date of publication of application: **10.03.2010**
(21) Application number: 08764150.2
(22) Date of filing: 17.06.2008
(51) Int. Cl.: H02J 9/00, H01M 10/44, H02J 7/00

(54) **POWER SUPPLY SYSTEM, AND POWER SUPPLY CONTROL METHOD AND POWER SUPPLY CONTROL PROGRAM EMPLOYED IN POWER SUPPLY SYSTEM**

(30) Priority: 22.06.2007 JP 2007165459
(71) Applicant: Panasonic Corporation, Kadoma-shi Osaka 571-8501 (JP)
(72) Inventor: IIDA, Takuma, Chuo-ku, Osaka-shi Osaka 540-6207 (JP); KIMURA, Tadao, Chuo-ku, Osaka-shi Osaka 540-6207 (JP)
(74) Representative: Schwabe - Sandmair - Marx
(86) International application number: PCT/JP2008/001555
(87) International publication number: WO 2009/001523

(57) **Abstract**

A power supply system 10 comprises a power supply 100 which supplies power to a load device 200; an electrical storage device 300 which supplies power to the load device 200 in place of the power supply 100 when the power supply 100 is stopped; and a power supply control device 500 which controls the supply of power from the electrical storage device 300 to the load device 200 by monitoring a state of the electrical storage device 300 and detecting an abnormal state of the electrical storage device 300. Upon acquiring disaster information predicting stoppage of the power supply 100, the power supply control device 500 shortens a monitoring period for monitoring the state of the electrical storage device 300, so that the state of the electrical storage device 300 can be reliably monitored during stoppage of the power supply 100, and thereby backup functions can be continued over as long a time period as possible.

## Description

### Technical Field

The present invention relates to a power supply system, including an electrical storage device which supplies power when a commercial power supply or other power supply has stopped, to a power supply control method of the power supply system, and to a program causing a computer to execute a power supply control method of the power supply system.

### Background Art

In recent years, storage devices have attracted attention and been used as backup power supplies for commercial power supplies. A backup power supply is charged when the commercial power supply is operating normally, and when an abnormality in the commercial power supply occurs, continues to supply electric power to equipment in place of the commercial power supply. A UPS (Uninterruptible Power Supply) is one such example. By instantaneously switching to the output from a backup power supply at the time of a power outage of the commercial power supply, shutdown of computers and storage devices being used, servers and other network equipment, and similar can be prevented in advance. In a backup power supply which incorporates such storage devices, control is performed so as to maintain a state of high remaining capacity, indicating the charged state of the electrical storage device (State of Charge, hereafter "SOC").

An electrical storage device may for example be combined with solar cells or another power generation device and used as a power supply system. A power generation device uses sunlight, wind, water power, or other natural energy to generate electric power. A power supply system which incorporates such an electrical storage device stores excess power in the electrical storage device, and by supplying power from the electrical storage device when required by a load device, improves energy efficiency.

A solar power generation system is an example of such a power supply system. In a solar power generation system, when the amount of power generated from sunlight is greater than the amount of power consumed by a load device, an electrical storage device is charged using the excess power. Conversely, when the generated power is less than the amount of power consumed by the load device, power discharged from the electrical storage device is supplied to the load device in order to augment the power deficiency. In such a solar power generation system, excess power which in the past would not have been utilized is stored in an electrical storage device, so that compared with a conventional power supply system, energy efficiency can be improved.

This principle is also exploited in hybrid electric vehicles (hereafter "HEVs") employing engines and motors. In an HEW, when the output from the engine is greater than the driving power necessary for vehicle travel, the excess power drives a generator to charge an electrical storage device. And in the HEV, during vehicle braking and deceleration, by using the motor as a generator, the electrical storage device is charged.

Further, load-leveling power supplies and plug-in hybrid vehicles which make effective use of power generated at night are attracting attention. A load-leveling power supply is a system with reduced power consumption. Power is accumulated in an electrical storage device at nighttime, when electric power rates are inexpensive, and the accumulated power is utilized in the daytime, when power consumption peaks. By leveling the amount of electric power consumption, the amount of electric power generated is made constant, with the aims of contributing to efficient utilization of electric power facilities and reduced facility investments.

On the other hand, plug-in hybrid vehicles utilize nighttime electric power. During travel in cities, in which fuel mileage is poor, travel is primarily EV travel in which electric power is supplied from an electrical storage device, and during long-distance travel, HEV travel utilizing the engine and the motor is employed. An aim of plug-in hybrid vehicles is to reduce the total amount of CO₂ emissions.

Further, hybrid elevators have been developed in which, by providing a passenger enclosure and a counterweight, the amount of power consumption required during operation is suppressed. In such elevator systems in general, charging is controlled such that the SOC does not increase to 100%, in order that excess electrical power due to the power generation action of the motor efficiently charges an electrical storage device, and charging is controlled such that the SOC does not fall to 0 (zero), in order to provide electric power to the motor when necessary. Specifically, control is executed such that the SOC of the electrical storage device normally is within the range from 20 % to 80%.

Such a hybrid elevator can utilize the electric power of the electrical storage device during a power outage, so that when a power outage or other anomalous state occurs during operation, electric power is supplied from the electrical storage device to drive the elevator, the elevator can be operated to move to the nearest floor or to an arbitrary floor, and passengers within the elevator enclosure can be safely rescued.

The electrical storage device mounted in a power supply system or similar as described above includes a plurality of storage elements (single cells, unit cells, or similar) connected in series. Hence in such a power supply system, the electrical storage device and each of the storage elements provided in the electrical storage device is monitored at prescribed sampling periods, and when an abnormality occurs in a storage element, power input and output to the electrical storage device is stopped, to prevent degradation caused by overdischarge and overcharge of the storage element.

As such a method of storage device control, for example Patent Document 1 discloses a method of control in which the power values of a secondary battery are measured at each prescribed period, and by judging whether an abnormality exists in the secondary battery from the measurement results, the secondary battery is protected from overdischarge and overcharge.

However, in the control method disclosed in Patent Document 1, measurement of the voltage and current of the secondary battery, computation of the power value of the secondary battery based on the measurement results, and judgment of the presence of an abnormality in the secondary battery based on the computation results, must all be executed upon each prescribed period. Further, this processing is of course executed during normal operation of the secondary battery, so that an extremely large burden is placed on the microcomputer which controls this processing. For this reason, when the period in which the above processing is performed is shortened, it becomes difficult to complete all the processing within a fixed amount of time.

In particular, in backup applications in which the supply of energy is required up until immediately before the electrical storage device enters a dangerous state, if the state of the electrical storage device can no longer be monitored in realtime, there is the possibility that the electrical storage device may reach a dangerous state.
Patent Document 1: Japanese Patent Application Laid-open No. 2006-136101

In light of the above problems, an object of the invention is to provide a power supply system, a power supply control method in a power supply system, and a power supply control program in a power supply system, which, when a power supply has stopped due to a disaster or for other reasons, can continue backup functions over as long a time period as possible by reliably executing monitoring of the state of an electrical storage device.

The power supply system according to one aspect of the invention includes a power supply which supplies power to a load device; an electrical storage device which supplies power to the load device in place of the power supply when the power supply is stopped; and a controller which controls the supply of power from the electrical storage device to the load device by monitoring a state of the electrical storage device and detecting an abnormal state of the electrical storage device; moreover, upon acquiring disaster information predicting stoppage of the power supply, the controller shortens a monitoring period for monitoring the state of the electrical storage device.

### Disclosure of the Invention

By means of the present invention, a power supply system, a power supply control method in a power supply system, and a power supply control program in a power supply system can be provided which, when a power supply has stopped, can continue backup functions over as long a time period as possible by reliably executing monitoring of the state of the electrical storage device.

### Brief Description of the Drawings

[Fig. 1] Fig. 1 is a block diagram showing the configuration of the power supply system of Embodiment 1 of the invention.
[Fig. 2] Fig. 2 is a block diagram showing the configuration of the first controller.
[Fig. 3] Fig. 3 is a block diagram showing the configuration of the second controller.
[Fig. 4] Fig. 4 is a flowchart showing the order of processing of power supply control in Embodiment 1 of the invention.
[Fig. 5] Fig. 5 is a block diagram showing the configuration of the power supply system of Embodiment 2 of the invention.
[Fig. 6] Fig. 6 is a block diagram showing another configuration of the first controller.
[Fig. 7] Fig. 7 is a flowchart showing the order of processing of power supply control in Embodiment 2 of the invention.
[Fig. 8] Fig. 8 shows another arrangement of an open/lose section.
[Fig. 9] Fig. 9 shows still another arrangement of an open/close section.

### Best Mode for Carrying Out the Invention

Below, embodiments of the invention are explained, referring to the drawings. The same sections are assigned the same symbols, and explanations of sections in the drawings with the same symbols may be omitted.

### (Embodiment 1)

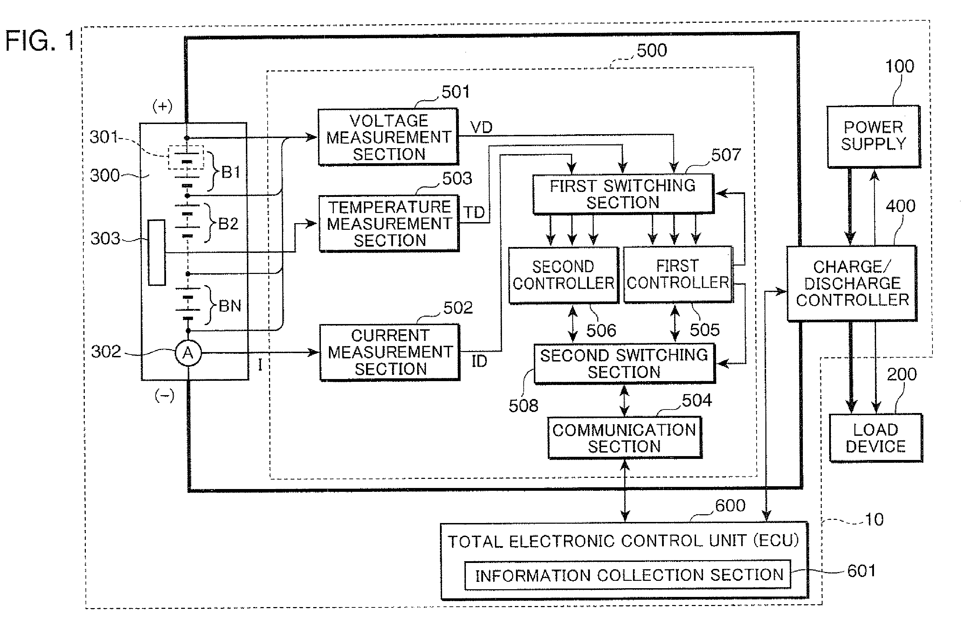

Fig. 1 is a block diagram showing the configuration of the power supply system of Embodiment 1 of the invention. As shown in Fig. 1, the power supply system 10 of the present embodiment includes a power supply 100, a storage device 300, a charge/discharge control device 400, a power supply control device 500, and a total electronic control unit (ECU) 600. The power supply system 10 may for example be a power supply system using a power generation device which generates electric power from natural energy, or a power supply system including an electrical storage device utilizing nighttime electric power such as a load leveling power supply or a plug-in hybrid vehicle, or may be a power supply system which backs up an ordinary power supply, as in a UPS or a hybrid elevator.

The power supply 100 may for example be a commercial power supply, or may be an electric generator employing an engine as the source of driving power, or similar. The load device 200 includes various loads which are driven by supplied electric power.

The electrical storage device 300 accumulates excess electric power from the power supply 100 and regenerated electric power generated by the load device 200; the accumulated electric power is supplied to the load device 200 as necessary. The electrical storage device 300 includes N storage element blocks B1, B2, ..., BN, connected in series. Each of the storage element blocks B1, B2, ..., BN includes a plurality of storage elements 301, electrically connected in series. As the storage elements 301, for example nickel hydrogen batteries or other alkaline storage batteries, lithium ion batteries or other organic batteries, or electrical double-layer capacitors can be used. No limitations in particular are placed on the number N of storage element blocks or on the number of storage elements 301. An electrical storage device 300 includes storage element blocks B1, B2, ..., BN made up of at least one storage element. Of course, the number and connection relation thereof are not limited to those in Fig. 1, and any combination of at least one storage element is sufficient.

The charge/discharge control device 400 controls charging and discharging of the electrical storage device 300, is connected to each of the power supply 100, load device 200, and storage device 300, and controls charging of the electrical storage device 300 from the power supply 100 and discharging from the electrical storage device 300 to the load device 200. When the consumption current of the load device 200 increases sharply, or when the power required by the load device 200 exceeds a prescribed value, the charge/discharge control device 400 discharges the deficient amount of power from the electrical storage device 300 to the load device 200.

Charge/discharge control by the charge/discharge control device 400 is normally performed such that the SOC of the electrical storage device 300 is within the range of approximately 20 % to 80%. However, in a load-leveling power supply, plug-in hybrid vehicle, or other equipment which effectively utilizes nighttime electric power, control is executed such that charging is performed until the SOC is 100%, and discharging is performed when energy is required by the load device.

The power supply control device 500 controls the supply of electric power from the electrical storage device 300 to the load device 200 when the power supply 100 has stopped.

The total ECU 600 is connected to the charge/discharge control device 400 and to the power supply control device 500, and controls the entirety of the power supply system 10.

Next, the power supply control device 500 is described. In Fig. 1, the power supply control device 500 includes a voltage measurement section 501, a current measurement section 502, a temperature measurement section 503, a communication section 504, a first controller 505, a second controller 506, a first switching section 507, and a second switching section 508.

The voltage measurement section 501 measures voltage values of the electrical storage device 300. Specifically, the voltage measurement section 501 measures, in time series with a prescribed period, the terminal voltages V0, V1, V2, ..., VN-1, VN of the respective N storage element blocks B1, B2, ..., BN of the electrical storage device 300. The measured terminal voltage for each storage element block is converted from an analog signal into a digital signal, and the voltage data for each block and the sum total thereof are output as terminal voltage data VD for the electrical storage device 300. Data output from the voltage measurement section 501 to the first switching section 507 is performed with a predetermined period. As a method of measuring in time series the terminal voltage for each storage element block, for example a flaying capacitor method is known.

The current measurement section 502 measures current values of the electrical storage device 300. Specifically, the current measurement section 502 measures, with a prescribed period, the charge/discharge current I of the electrical storage device 300 using a current sensor 302. The measured charge/discharge current is converted from an analog signal into a digital signal, and is output, together with a C (Charge)/D (Discharge) symbol indicating the charge direction (+) or the discharge direction (-), as charge/discharge current data ID. Data output from the current measurement section 502 to the first switching section 507 is, similarly to data output from the voltage measurement section 501, output with a predetermined period. Here, the current sensor 302 includes a resistor element, current transformer, and similar.

The temperature measurement section 503 measures the temperature of the electrical storage device 300. Specifically, the temperature measurement section 503 uses a temperature sensor 303 arranged within the electrical storage device 300 to measure, with a prescribed period, the temperature within the electrical storage device 300. The measured temperature is converted from an analog signal into a digital signal and is output, with a predetermined period, to the first switching section 507 as temperature data TD.

The communication section 504 enables communication between the second switching section 508 and the ECU 600. The means of communication between the ECU 600 and the communication section 504 may be serial communication such as an ordinary RS232C interface, or may be CAN, LIN, or Ethernet, or may be by wireless means, or similar.

The first controller 505 controls each of the sections within the power supply control device 500. For example, the integral of the charge/discharge current data ID output from the current measurement section 502 is computed over a prescribed time interval (for example, a time interval of one day or less), to compute an integrated capacity Q. When performing this integration, if the sign C/D received together with the charge/discharge current data ID indicates the charging direction (+), the charge/discharge current data ID is multiplied by the charging efficiency (a coefficient smaller than 1, for example 0.8). The first controller 505 uses the integrated capacity Q to predict and store the remaining capacity SOC.

Here, the SOC was determined using the integrated capacity Q as described above, but the present embodiment is not limited to such a configuration. For example, a plurality of data pairs of voltage data VD and current data ID can be acquired in the charge direction (+) and in the discharge direction (-), the no-load voltage Vo which is the voltage intercept when these data pairs are approximated by a straight line (VD-ID straight line) can be determined, and the electromotive force Vemf, obtained as the difference between the no-load voltage Vo and the voltage drop due to internal resistance and the polarization component of the electrical storage device 300, can be used as an index to reference an electromotive force-SOC characteristic table prepared in advance through experiments to determine the SOC. Further, in applications in which the temperature of the electrical storage device 300 fluctuates greatly, temperature data TD output from the temperature measurement section 503 can be used as a correction parameter for the above-described electromotive force-SOC characteristic table.

As explained below, the second controller 506 only performs, from among the processing executed by the first controller 505, detection of an abnormal state of the electrical storage device 300 when the power supply 100 is stopped and charge/discharge management of the electrical storage device 300 based thereupon. The second controller 506 is a controller which is specialized for execution of this processing, and by limiting the processing content thereof, the processing performance relative to the first controller 505 can be greatly improved.

The first switching section 507 takes as inputs the terminal voltage data VD from the voltage measurement section 501, the charge/discharge current data ID from the current measurement section 502, and the temperature data TD from the temperature measurement section 503, and outputs these data items to one among the first controller 505 and the second controller 506. The first switching section 507 is controlled by the first controller 505, and the output destination of the first switching section 507 is decided based on an instruction from the first controller 505.

The second switching section 508 enables communication between the total ECU 600 and one among the first controller 505 and the second controller 506, using the communication section 504. The second switching section 508 is controlled by the first controller 505, and the connecting end of the first switching section 507 is decided based on an instruction from the first controller 505.

Next, processing of power supply control by the power supply control device 500 is explained. The power supply control device 500 monitors the state of the electrical storage device 300 when supplying power from the electrical storage device 300 to the load device 200 while the power supply 100 is stopped, and maintains the power supply capability of the electrical storage device 300. Below, this processing for power supply control is explained in detail. Initially, the configuration of the first controller 505 and second controller 506 is explained using Pig. 2 and Pig. 3, and then the procedure of processing for power supply control is explained.

First, as explained above, the first controller 505 controls internal sections of the power supply control device 500, and for example is configured as follows in order to execute the above-described processing for power supply control.

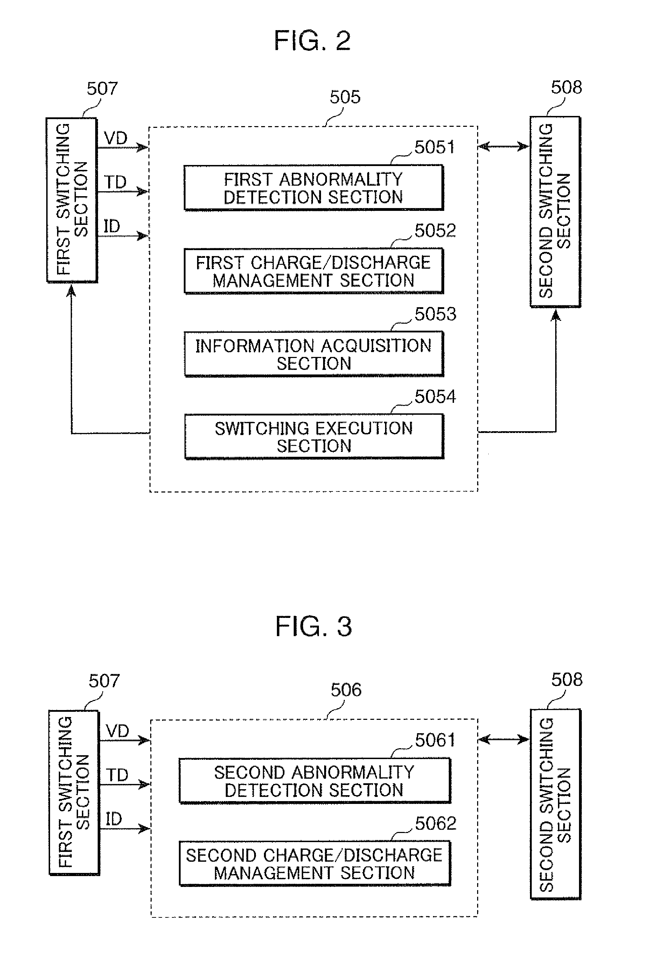

Pig. 2 shows a configuration to be provided in the first controller 505, in order to realize the processing for power supply control of the power supply control device 500. In Fig. 2, the first controller 505 includes a first abnormality detection section 5051, first charge/discharge management section 5052, information acquisition section 5053, and switching execution section 5054.

The first abnormality detection section 5051 monitors the states of the storage element blocks B1, B2, ..., BN of the electrical storage device 300 with a prescribed period, and detects an abnormal state of the electrical storage device 300. The first abnormality detection section 5051 acquires as appropriate, via the first switching section 507, the voltage data VD, charge/discharge current data ID, and temperature data TD output from the voltage measurement section 501, current measurement section 502 and temperature measurement section 503, performs various computations based on these data items VD, ID and TD, and detects an abnormal state of the electrical storage device 300. For example, if the voltage value of the electrical storage device 300 is equal to or less than a prescribed voltage value in a prescribed time interval, the first abnormality detection section 5051 determines that an overdischarge state exists in the electrical storage device 300, and detects an abnormal state of the electrical storage device 300.

The first charge/discharge management section 5052 sets a target value for a state quantity of the electrical storage device 300 (hereafter called a "target state quantity"), which is used in charge/discharge control of the electrical storage device 300 by the charge/discharge control device 400. The charge/discharge control device 400 controls charge/discharge of the electrical storage device 300 based on this target state quantity. The state quantity of the electrical storage device 300 may for example be the SOC, indicating the charged state of the electrical storage device 300; the first charge/discharge management section 5052 reverts this target state quantity as necessary. The target state quantity which has thus been set is output to the charge/discharge control device 400 via the second switching section 508, communication section 504, and total ECU 600.

The information acquisition section 5053 monitors input of stoppage information for the power supply 100 to the first controller 505, and acquires the stoppage information. Stoppage information for the power supply 100 is taken to indicate stoppage of, for example, a commercial power supply, main power supply, or similar. Such information may also include disaster information indicating the possibility of stoppage of a commercial power supply. Disaster information may be meteorological information predicting flood damage, conflagration information, or earthquake information. Of course, such information is not limited to the above examples, and may be any information on stoppage of the power supply 100, or disaster information predicting such stoppage.

The switching execution section 5054 controls the first switching section 507 and second switching section 508. The switching execution section 5054, by controlling the first switching section 507, inputs to either the first controller 505 or the second controller 506, the voltage data VD, charge/discharge current data ID, and temperature data TD output from the voltage measurement section 501, the current measurement section 502, and the temperature measurement section 503. The switching execution section 5054, by controlling the second switching section 508, enables communication of either the first controller 505 or the second controller 506 with the total ECU 600 using the communication section 504.

Next, Fig. 3 shows the structure to be provided by the second controller 506, in order to realize the processing for power supply control of the power supply control device 500. In Fig. 3 the second controller 506 includes a second abnormality detection section 5061 and a second charge/discharge management section 5062.

The second abnormality detection section 5061, similarly to the above-described first abnormality detection section 5051, monitors the states of the storage element blocks B1, B2, ..., BN of the electrical storage device 300 with a prescribed period, and detects an abnormal state of the electrical storage device 300. The second abnormality detection section 5061 acquires as appropriate, via the first switching section 507, voltage data VD, charge/discharge current data ID, and temperature data TD output from the voltage measurement section 501, the current measurement section 502 and the temperature measurement section 503; performs various computations based on these data items VD, ID and TD; and detects an abnormal state of the electrical storage device 300. For example, if the voltage value of the electrical storage device 300 is equal to or less than a prescribed voltage value in a prescribed time interval, the second abnormality detection section 5061 determines that an overdischarge state exists in the electrical storage device 300, and detects an abnormal state of the electrical storage device 300.

Here, a difference between the second abnormality detection section 5061 and the first abnormality detection section 5051 is the fact that the period of state monitoring of the electrical storage device 300 by the second abnormality detection section 5061 is set to be shorter than that for the first abnormality detection section 5051. As explained above, the second controller 506 only performs detection of an abnormal state of the electrical storage device 300 when the power supply 100 is stopped and charge/discharge management of the electrical storage device 300 based thereupon, and compared with the first controller 505, the processing performance for this processing is greatly improved. Hence the second abnormality detection section 5061 can monitor in realtime the state of the electrical storage device 300 with a period shorter than that of the first abnormality detection section 5051. Consequently when the power supply 100 is stopped, the supply of power from the electrical storage device 300 can be continued until immediately before the electrical storage device 300 enters a dangerous state. For example, state monitoring of the electrical storage device 300 by the first abnormality detection section 5051 is executed with a period of 100 ms, and state monitoring of the electrical storage device 300 by the second abnormality detection section 5061 is executed with a period of 50 ms.

The second charge/discharge management section 5062, similarly to the above-described first charge/discharge management section 5052, sets a target state quantity for the electrical storage device 300, which is used in charge/discharge control of the electrical storage device 300 by the charge/discharge control device 400. The charge/discharge control device 400 controls charge/discharge of the electrical storage device 300 based on this target state quantity. The state quantity of the electrical storage device 300 may for example be the SOC, indicating the charged state of the electrical storage device 300; the second charge/discharge management section 5062 reverts this target state quantity as necessary.

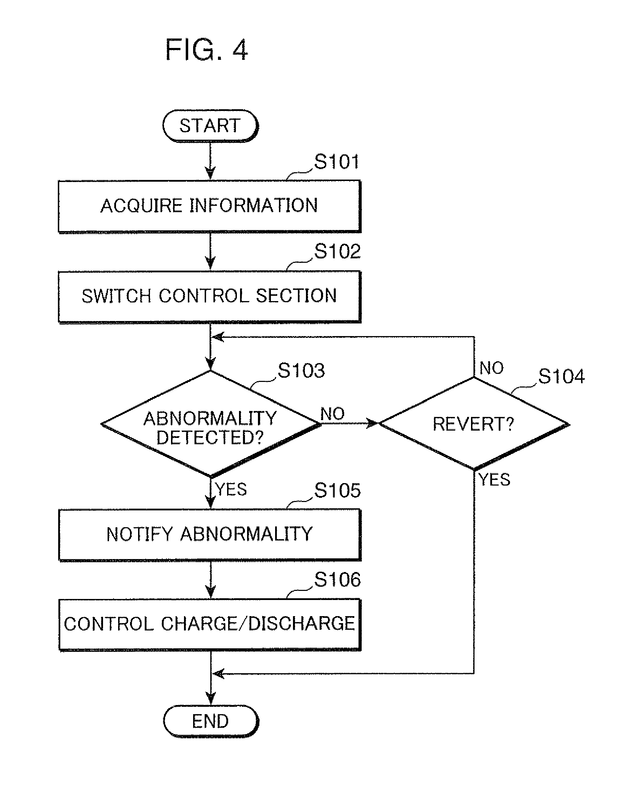

Next, the procedure of processing for this power supply control is explained using Fig. 4. Fig. 4 is a flowchart showing the procedure of processing for power supply control of the power supply control device 500 in the present embodiment.f

As shown in Fig. 4, the information acquisition section 5053 monitors the input to the first controller 505 of stoppage information for the power supply 100, and acquires the stoppage information (step S101). Here, stoppage information for the power supply 100 is collected by the total ECU 600, and is output to the power supply control device 500. The total ECU 600 internally includes an information collection section 601 to collect stoppage information for the power supply 100, and stoppage information from outside for the power supply 100 is collected using the information collection section 601. Stoppage information for the power supply 100 may for example be information relating to stoppage of the power supply 100 due to meteorological conditions, conflagrations, earthquakes, or other disasters; this information is collected by the information collection section 601. The information collection section 601 may also directly detect stoppage of the supply of power by the power supply 100.

When stoppage information for the power supply 100 is acquired by the information acquisition section 5053, the switching execution section 5054, by controlling the first switching section 507, inputs to the second controller 506 the voltage data VD, charge/discharge current data ID, and temperature data TD output from the voltage measurement section 501, current measurement section 502 and temperature measurement section 503. Further, the switching execution section 5054, by controlling the second switching section 508, enables communication between the total ECU 600 and the second controller 506 using the communication section 504 (step S102). That is, upon acquiring stoppage information for the power supply 100, the first controller 505 uses the switching execution section 5054 to control the first and second switching sections 507 and 508, so as to cause the second controller 506 to execute the abnormal state detection of the electrical storage device 300 and the charge/discharge mafnagement of the electrical storage device 300 based thereupon which had been executed theretofore by the first controller 505. Hence when the power supply 100 stops, and a backup function by the electrical storage device 300 is executed, monitoring of the state of the electrical storage device 300 can be executed reliably with a shorter period than during normal operation of the power supply 100, and without detracting from realtime properties.

The second abnormality detection section 5061 of the second controller 506 begins state monitoring of the electrical storage device 300 in place of the first abnormality detection section 5051 of the first controller 505 (step S103). The second abnormality detection section 5061 monitors the state of the electrical storage device 300 with a prescribed period, and in addition, upon detection of an abnormal state of the electrical storage device 300 (YES in step S103), the second controller 506 uses the communication section 504 to notify the total ECU 600 of the abnormal state of the electrical storage device 300 (step S105).

on the other hand, so long as no anomalous state of the electrical storage device 300 is detected in step S103 above (NO in step S103), monitoring of the state of the electrical storage device 300 in the above step S103 is continued until the power supply 100 is reverted (YES in step S104).

Upon receiving notification of the abnormal state of the electrical storage device 300 from the power supply control device 500, the total ECU 600 controls the charge/discharge control device 400 to cause charge/discharge of the electrical storage device 300 to be stopped (step S 106).

In this way, processing for power supply control in Embodiment 1 of the invention is executed.

As explained above, by means of Embodiment 1 of the invention, when the power supply 100 is stopped, the period for monitoring of the state of the electrical storage device 300 is made shorter than during normal operation of the power supply 100, so that an abnormal state of the electrical storage device 300 can be detected promptly and reliably, the electrical storage device 300 can be stopped, and the electrical storage device 300 can be protected. Hence even when the supply of power is required up until immediately before the electrical storage device 300 enters a dangerous state, the backup function of the electrical storage device 300 can be continued over as long a time period as possible, without the electrical storage device 300 reaching a dangerous state.

In Embodiment 1 of the invention, the details of the stopped state of the power supply 100 may be ascertained based on stoppage information for the power supply 100 acquired by the first charge/discharge management section 5052 through the information acquisition section 5053 in step S101 of Fig. 4, and the target state quantity of the electrical storage device 300 may be reset according to these details. By temporarily reducing the target state quantity of the electrical storage device 300, the power supply capacity of the electrical storage device 300 can be increased. Hence if for example stoppage of the power supply 100 is prolonged, by increasing the power supply capacity of the electrical storage device 300, the power required by the load device 200 can be supplied continuously over a still longer time period.

In step S105 of Fig. 4, the second charge/discharge management section 5062 may ascertain the details of an abnormal state of the electrical storage device 300 detected by the second abnormality detection section 5061, and may reset the target state quantity of the electrical storage device 300 according to the details. In this case also, by temporarily reducing the target state quantity of the electrical storage device 300, the power supply capacity of the electrical storage device 300 can be increased. By this means, the period of state monitoring of the electrical storage device 300 is shortened and anomalies are detected early, and the charged state of the electrical storage device 300 is limited to a safe range according to the abnormal state of the electrical storage device 300, so that the maximum amount of energy can be supplied in times of disaster, while securing the safety of the electrical storage device 300.

In any of the above-described cases, temporary overdischarge of the electrical storage device 300 occurs, but so long as overdischarge occurs in a range in which the battery characteristics, lifetime, and reliability of the electrical storage device 300 are not compromised, there is no effect on the battery characteristics or similar of the electrical storage device 300.

Further, when the target state quantity to be used as a target value when charging the electrical storage device 300 is a first target state quantity, and the target state quantity to be used as a target value when discharging the electrical storage device 300 is a second target state quantity, by having the first charge/discharge management section 5052 raise the first target state quantity and lower the second target state quantity when disaster information is acquired, the capacity of power supply to the load device 200 by the electrical storage device 300 may be increased.

For example, when the range SOC > 100% is the overcharge region and the range SOC < 0% is the overdischarge region, if during normal operation the first target state quantity is set to SOC = 80% and the second target state quantity is set to SOC = 20%, then upon acquisition of disaster information, the first target state quantity may be reset to SOC = 100% and the second target state quantity may be reset to SOC = 0%.

Further, in Embodiment 1 of the invention, by for example greatly improving the processing capability of the first controller, the first controller 505 and the second controller 506 can be integrated. In this case, the first and second switching sections 507 and 508 become unnecessary, the number of components of the power supply control device 500 can be reduced, and the cost of the power supply system 10 can be lowered. A controller which integrates the first controller 505 and the second controller 506, upon acquiring stoppage information for the power supply 100, executes state monitoring of the electrical storage device 300 with a period shorter than during normal operation of the power supply 100. Further, a configuration may be employed in which, when stoppage of the power supply 100 has been resolved, the period of state monitoring of the electrical storage device 300 is returned to the normal period.

Further, in Embodiment 1 of the invention, a program to realize the processing of power supply control of the power supply management device 500 may be executed on a microcomputer. That is, a power supply control program to realize the first abnormality detection section 5051, first charge/discharge management section 5052, information acquisition section 5053, and switching execution section 5054 provided in the first controller 505 shown in Fig. 2, as well as the second abnormality detection section 5061 and second charge/discharge management section 5062 provided in the second controller 506 shown in Fig. 3, may be installed on a microcomputer, and this power supply control program may be executed on the microcomputer.

By causing a microcomputer to read and execute this power supply control program, the power supply control method of the power supply control device 500 is realized. This power supply control program may be installed in a storage section of the microcomputer, and the power supply control program may be executed by the central processing unit (CPU) of the microcomputer. By using the CPU of the microcomputer to execute the power supply control program, the first abnormality detection section 5051, first charge/discharge management section 5052, information acquisition section 5053, switching execution section 5054, second abnormality detection section 5061, and second charge/discharge management section 5062, are realized.

Further, in Embodiment 1 of the invention, the charge/discharge control device 400 can be endowed with functions of the first controller 505 and second controller 506. In this case, for example the above-described power supply control program may be installed in a microcomputer provided in the charge/discharge control device 400, and this program may be executed. Of course, functions of the charge/discharge control device 400 may be provided in the first controller 505 or in the second controller 506. Further, the load device 200 or the total ECU 600 may be endowed with functions of the first and second controllers 505 and 506. For example, when the total ECU 600 includes functions of the first and second controllers 505 and 506, the power supply control device 500 has only limited functions, such as functions for measuring the voltage, temperature, and current of the electrical storage device 300. Further, a power supply of the present invention may be a network-type power supply comprising an information transmission/reception section.

### (Embodiment 2)

Next, Embodiment 2 of the invention is explained. The above-described Embodiment 1 related to a power supply system in which, when stoppage information for the power supply 100 is acquired, monitoring of the state of the electrical storage device is executed reliably by shortening the period of state monitoring of the electrical storage device 300, and the backup function is continued over as long a time period as possible. On the other hand, in the present embodiment, when stoppage information for the power supply 100 has been acquired, by forcibly detaching the electrical storage device 300 from the charge/discharge control device 400 after a prescribed time has elapsed, the safety of the electrical storage device 300 and power supply system 10 is reliably secured.

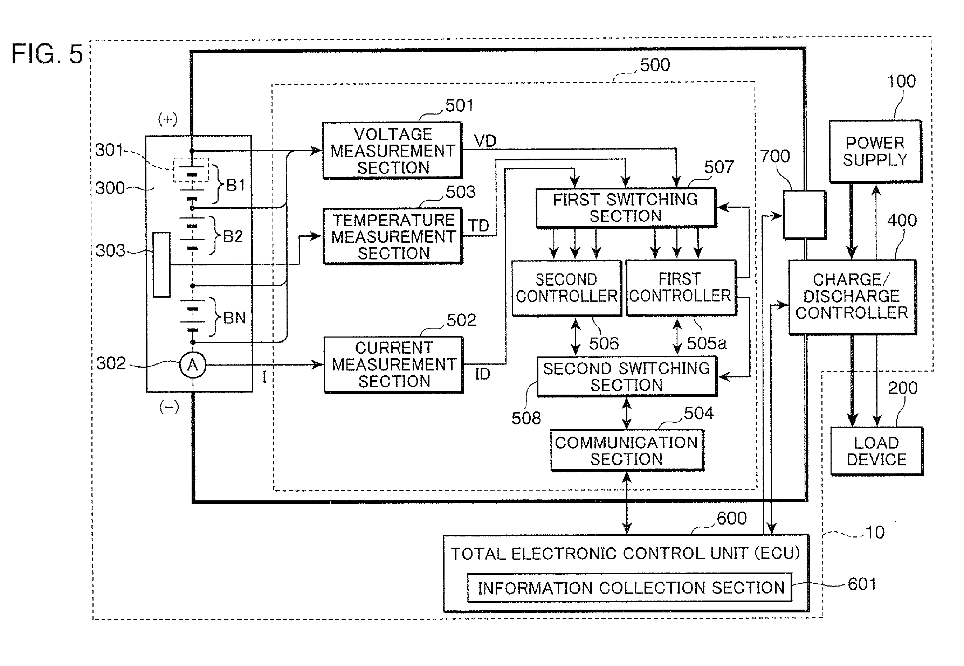

Fig. 5 is a block diagram showing the configuration of the power supply system of Embodiment 2 of the invention. As shown in Fig. 5, the power supply system 10 of the present embodiment, similarly to the above-described Embodiment 1, includes a power supply 100, a storage device 300, a charge/discharge control device 400, a power supply control device 500, and a total electronic control unit (ECU) 600. The power supply system 10 of the present embodiment differs from the above Embodiment 1 in that the power supply control device 500 includes a first controller 505a in place of the first controller 505, and in that an open/close section 700 is positioned on the path connecting the electrical storage device 300 and the charge/discharge control device 400. These differences are explained below.

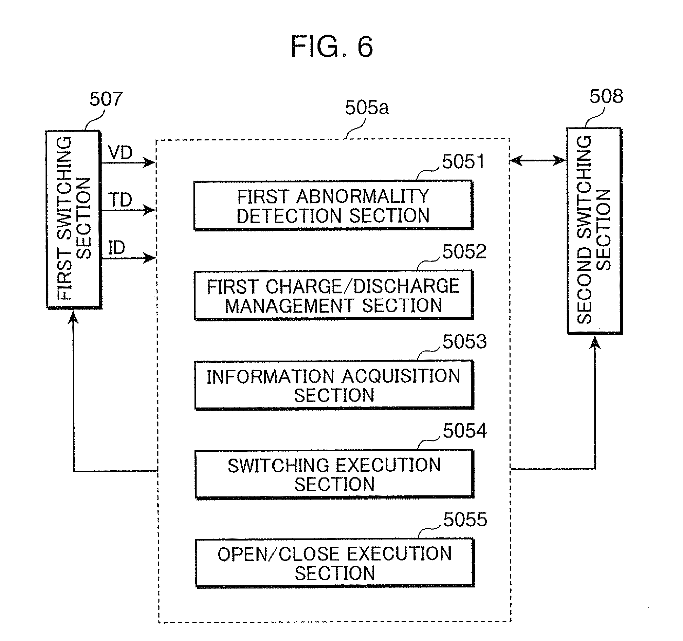

Fig. 6 shows a configuration to be provided in the first controller 505a, in order to realize the processing for power supply control of the power supply control device 500 of the present embodiment. In Fig. 6, the first controller 505a, similarly to the first controller 505 of Embodiment 1 above, includes a first abnormality detection section 5051, first charge/discharge management section 5052, information acquisition section 5053, and switching execution section 5054, and further includes an open/close execution section 5055.

Upon acquisition of presentation information for the power supply 100 by the information acquisition section 5053, the open/close execution section 5055 measures the time elapsed from the time of the acquisition, and after a predetermined prescribed time has elapsed, uses the communication section 504 to notify the total ECU 600 of the fact that the prescribed time has elapsed. At this time of this notification, the first controller 505a controls the second switching section 508 using the switching execution section 5054, and secures communication with the total ECU 600. The prescribed time may be decided in advance according to the power required by the load device 200 connected to the power supply system 10. Of course, the time length may also be determined according to the time period over which the power supply 100 is stopped.

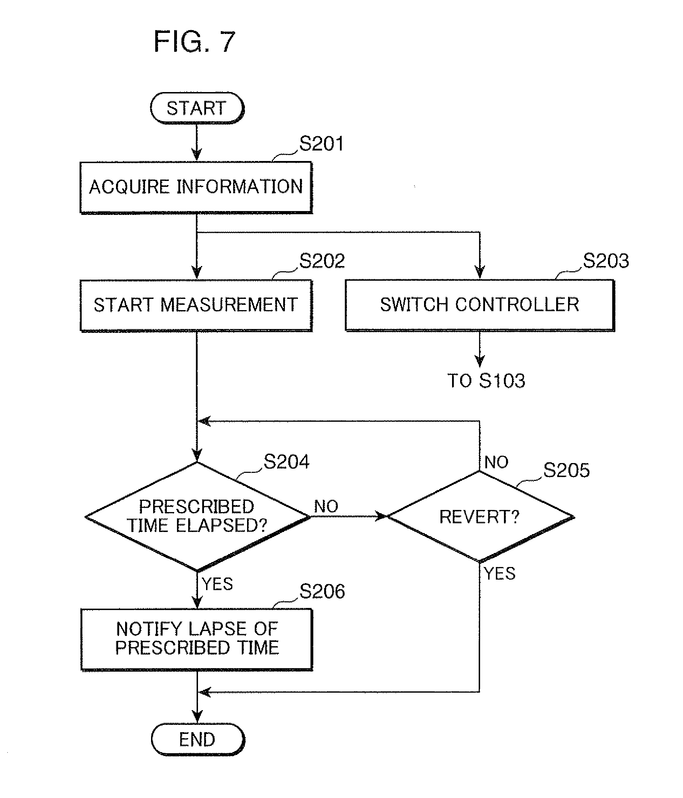

Next, Fig. 7 is used to explain a procedure of processing for power supply control in the present embodiment, Fig. 7 is a flowchart showing the procedure of processing for power supply control in the embodiment.

As shown in Fig. 7, the information acquisition section 5053 monitors the input to the first controller 505 of stoppage information for the power supply 100, and acquires such stoppage information (step S201). When stoppage information for the power supply 100 is acquired by the information acquisition section 5053, similarly to the above-described Embodiment 1, the switching execution section 5054 controls the first switching section 507 to input to the second controller 506 the voltage data VD, charge/discharge current data ID, and temperature data TD output from the voltage measurement section 501, the current measurement section 502, and the temperature measurement section 503. And the switching execution section 5054 controls the second switching section 508 to enable communication between the total ECU 600 and the second controller 506 using the communication section 504 (step S203). Thereafter, processing proceeds to step S 103 in Fig. 4.

Further, when in the present embodiment stoppage information for the power supply 100 is acquired by the information acquisition section 5053 (step S201), the open/close execution section 5055 begins measurement of the time elapsed from the time of acquisition (step S202). And, after a predetermined time has elapsed (YES in step S204), the open/close execution section 5055 uses the second switching section 508 and the communication section 504 to notify the total ECU 600 that the prescribed time has elapsed (step S206). Upon receiving the notification from the power supply control device 500, the total ECU 600 controls the open/close section 700 to detach the electrical storage device 300 from the charge/discharge control device 400.

On the other hand, in the above step S204, so long as the prescribed time has not elapsed (NO in step S204), the monitoring over the prescribed time in the above step S204 is continued until the power supply 100 is reverted (YES in step S205).

In this way, processing for power supply control in Embodiment 2 of the present invention is executed.

As explained above, by means of Embodiment 2 of the invention, when the power supply 100 is stopped, by putting the open/close section 700 into the open state after a prescribed quantity of power has been supplied to the load device 200, the electrical storage device 300 can reliably be prevented from falling into an overdischarge or other dangerous state, and the safety of the electrical storage device 300 and of the power supply system 10 itself can be secured. Hence the safety of the power supply system 10 can be secured while operating the load device 200 for as long as possible.

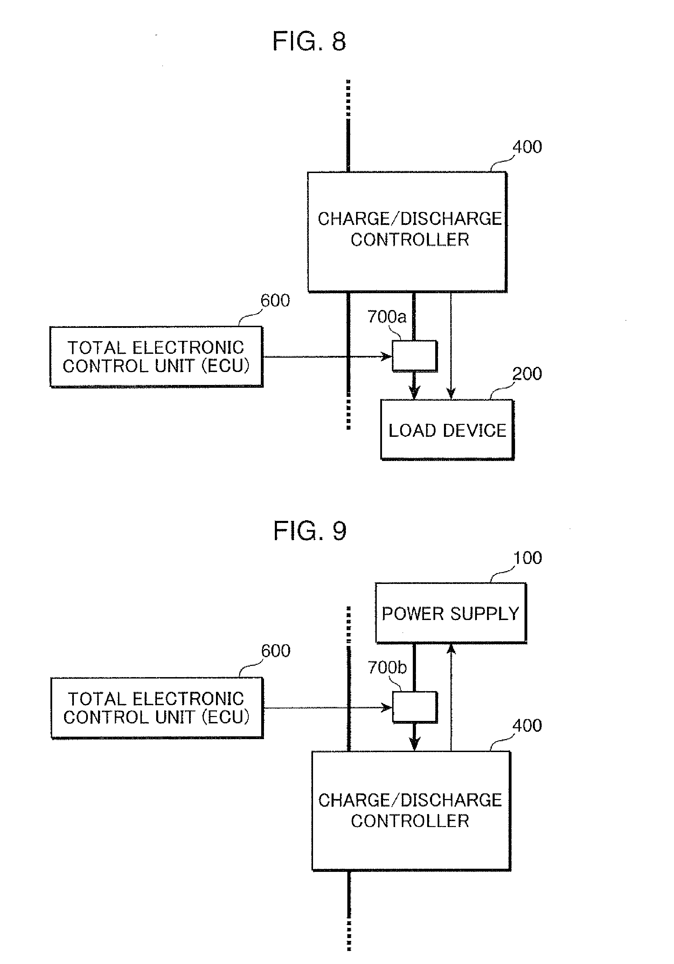

As shown in Fig. 8, in Embodiment 2 of the invention an open/close section 700a may be positioned on the path connecting the charge/discharge control device 400 and the load device 200. As shown in Fig. 9, an open/close section 700b may be positioned on the path connecting the charge/discharge control device 400 and the power supply 100. In these cases, even when the electrical storage device 300 has reached a dangerous state, the safety of the power supply 100 and load device 200 can be secured.

Further, when stoppage of the power supply 100 has been resolved, the total ECU 600 may control the open/close section 700 so as to again connect the electrical storage device 300 and the charge/discharge control device 400.

Further, in step S204 of Fig. 7, when an abnormality of the electrical storage device 300 is detected by the second controller 506 even after the prescribed time has elapsed, the open/close section 700 may detach the electrical storage device 300 from the charge/discharge control device 400.

Further, in Embodiment 2 of the invention, a program to realize the processing of power supply control of the power supply management device 500 may be executed on a microcomputer. That is, a power supply control program to realize the first abnormality detection section 5051, first charge/discharge management section 5052, information acquisition section 5053, switching execution section 5054, and open/close execution section 5055 provided in the first controller 505 shown in Fig. 6, as well as the second abnormality detection section 5061 and second charge/discharge management section 5062 provided in the second controller 506 shown in Fig. 3, may be installed on a microcomputer, and this power supply control program may be executed on the microcomputer.

By causing a microcomputer to read and execute this power supply control program, the power supply control method of the power supply control device 500 is realized. This power supply control program may be installed in a storage section of the microcomputer, and the power supply control program may be executed by the central processing unit (CPU) of the microcomputer. By using the CPU of the microcomputer to execute the power supply control program, the first abnormality detection section 5051, first charge/discharge management section 5052, information acquisition section 5053, switching execution section 5054, open/close execution section 5055, second abnormality detection section 5061, and second charge/discharge management section 5062, are realized.

The invention may be summarized using each of the above embodiments as follows. A power supply system of the invention includes a power supply which supplies electric power to a load device; an electrical storage device which, during stoppage of the power supply, supplies electric power to the load device in place of the power supply; and a controller which controls the supply of power from the electrical storage device to the load device by monitoring a state of the electrical storage device and detecting an abnormal state of the electrical storage device; upon acquiring disaster information predicting stoppage of the power supply, the control device shortens a monitoring period for monitoring the state of the electrical storage device.

By means of a power supply system of the present invention, when stoppage of the power supply is predicted, by shortening the monitoring period for monitoring the state of the electrical storage device, an abnormal state of the electrical storage device can reliably be detected even when the electrical storage device enters a dangerous state due to supply of power to the load device. Hence the supply of electric power by the electrical storage device to the load device can be continued for as long as possible, without the electrical storage device reaching a dangerous state.

Upon detecting an abnormal state of the electrical storage device, it is preferable that the controller reduce a power charging the electrical storage device from the power supply and a power discharging from the electrical storage device to the load device, to keep the input/output power of the electrical storage device within a prescribed range, thereby controlling the supply of power from the electrical storage device to the load device.

In this case, even when the electrical storage device is in an abnormal state, by reducing the charging power input to the electrical storage device and the discharging power output from the electrical storage device, the power input to and output from the electrical storage device is limited to within a prescribed range. As a result, the electrical storage device can be prevented from reaching a dangerous state due to an increase in the input/output power of the electrical storage device.

In the above power supply system, it is preferable that the controller have an information acquisition section which acquires the disaster information, and a first abnormality detection section which monitors the state of the electrical storage device with the monitoring period and detects an abnormal state of the electrical storage device, and that a first period be set as the monitoring period during normal operation of the power supply, and that a second period shorter than the first period be set as the monitoring period upon acquisition of the disaster information.

In this case, disaster information is acquired by the information acquisition section, so the monitoring periods can be shortened according to predictions of stoppage of the power supply.

In the above power supply system, it is preferable that the controller further include a charge/discharge management section which sets a first target state quantity indicating a charged state of the electrical storage device to be taken as a target value when charging the electrical storage device, and a second target state quantity indicating a charged state of the electrical storage device to be taken as a target value when discharging the electrical storage device, in order to maintain a charged state of the electrical storage device in a prescribed range, and that when disaster information is acquired, the first target state quantity is raised and the second target state quantity is lowered, to increase a capacity of power supply to the load device by the electrical storage device.

In this case, by raising the first target state quantity and lowering the second target state quantity of the electrical storage device when stoppage of the power supply is predicted, the quantity of power supplied to the load device can be temporarily increased during a disaster.

In the above power supply system, it is preferable that the controller further include a second abnormality detection section which, at the time of acquisition of disaster information, executes monitoring of the state of the electrical storage device and detection of an abnormal state of the electrical storage device, and that the first abnormality detection section execute monitoring of the state of the electrical storage device and detection of an abnormal state of the electrical storage device during normal operation of the electrical storage device.

In this case, by separately providing a second abnormality detection section which executes only state monitoring of the electrical storage device and detection of an abnormal state of the electrical storage device when stoppage of the power supply is predicted, this processing can be reliably completed even with a second monitoring period which is shorter than the first monitoring period.

In the above power supply system, it is preferable that the power supply system further comprise an open/close section which can disconnect the electrical connection between the electrical storage device and the power supply system, and that the controller further include an open/close execution section which causes execution of disconnection of the electrical connection between the electrical storage device and the power supply system by the open/close section after a prescribed time has elapsed upon acquisition of disaster information.

In this case, after a prescribed quantity of electric power has been supplied to the load device, the electrical storage device is electrically detached from the power supply system, so that the electrical storage device can be reliably prevented from falling into an overdischarge or other dangerous state, and the safety of the electrical storage device and of the power supply system itself can be secured.

A power supply control method of a power supply system of the present invention is a power supply control method of a power supply system that has an electrical storage device which, at the time of stoppage of a power supply for supplying electric power to a load device, supplies power to the load device in place of the power supply, and that controls the supply of power from the electrical storage device to the load device by monitoring a state of the electrical storage device and detecting an abnormal state of the electrical storage device, and the method includes a step of monitoring the state of the electrical storage device with a first monitoring period to monitor the state of the electrical storage device, and detecting an abnormal state of the electrical storage device during normal operation of the power supply, and a step of monitoring the state of the electrical storage device with a second monitoring period shorter than the first monitoring period, and detecting an abnormal state of the electrical storage device upon acquisition of disaster information predicting stoppage of the power supply.

According to the power supply control method of a power supply system of the present invention, when stoppage of a power supply is predicted, by shortening the monitoring period for monitoring the state of an electrical storage device, an abnormal state of the electrical storage device can be promptly detected, even when the electrical storage device has entered a dangerous state due to the supply of power to a load device. Hence the supply of electric power by the electrical storage device to the load device can be continued for as long as possible, without the electrical storage device reaching a dangerous state.

A power supply control program of a power supply system of the present invention is a power supply control program of a power supply system that has an electrical storage device which, at the time of stoppage of a power supply for supplying electric power to a load device, supplies power to the load device in place of the power supply, and that controls the supply of power from the electrical storage device to the load device by monitoring a state of the electrical storage device and detecting an abnormal state of the electrical storage device, and the program causes a computer to function as an information acquisition section which acquires disaster information predicting stoppage of the power supply, and as an abnormality detection section which monitors the state of the electrical storage device with a monitoring period for monitoring the state of the electrical storage device, and detects an abnormal state of the electrical storage device; and the abnormality detection section performs monitoring with a first monitoring period during normal operation of the power supply, and performs monitoring with a second monitoring period shorter than the first monitoring period when disaster information is acquired.

According to the power supply control program of a power supply system of the present invention, when stoppage of the power supply is predicted, an abnormal state of the electrical storage device can be promptly detected, even when the electrical storage device has entered a dangerous state due to the supply of power to a load device. Hence the supply of electric power by the electrical storage device to the load device can be continued for as long as possible, without the electrical storage device reaching a dangerous state.

The embodiments of the invention disclosed above are illustrative, and do not limit the invention. The scope of the invention is not limited to the details disclosed, but is described by the scope of claims, and should be understood as including concepts equivalent to the claims and all modifications within the scope of claims.

### Industrial Applicability

A power supply system, and a power supply control method and power supply control program of a power supply system of the present invention, are advantageous for use in power supplies and equipment having backup power supply functions, and can be applied in industry.

## Claims

1. A power supply system, comprising:
a power supply which supplies electric power to a load device;
an electrical storage device which, during stoppage of said power supply, supplies electric power to said load device in place of said power supply; and
a controller which controls the supply of power from said electrical storage device to said load device by monitoring a state of said electrical storage device and detecting an abnormal state of said electrical storage device;
and **characterized in that**
upon acquiring disaster information predicting stoppage of said power supply, said control device shortens a monitoring period for monitoring the state of said electrical storage device.

2. The power supply system according to Claim 1, **characterized in that**, upon detecting an abnormal state of said electrical storage device, said controller reduces a power charging said electrical storage device from said power supply and a power discharging from said electrical storage device to said load device, to keep the input/output power of said electrical storage device within a prescribed range, thereby controlling the supply of power from said electrical storage device to said load device.

3. The power supply system according to Claim 1, **characterized in that** said controller comprises an information acquisition section which acquires the disaster information, and a first abnormality detection section which monitors the state of said electrical storage device with the monitoring period and detects an abnormal state of said electrical storage device, and **in that** a first period is set as said monitoring period during normal operation of said power supply, and a second period shorter than said first period is set as said monitoring period upon acquisition of said disaster information.

4. The power supply system according to Claim 3, **characterized in that** said controller further comprises a charge/discharge management section which, in order to maintain a charged state of said electrical storage device in a prescribed range, sets a first target state quantity indicating a charged state of said electrical storage device to be taken as a target value when charging said electrical storage device, and a second target state quantity indicating a charged state of the electrical storage device to be taken as a target value when discharging said electrical storage device, and **in that**, when said disaster information is acquired, said first target state quantity is raised and said second target state quantity is lowered, to increase a capacity of power supply to said load device by said electrical storage device.

5. The power supply system according to Claim 3, **characterized in that** said controller further comprises a second abnormality detection section which, at the time of acquisition of said disaster information, executes monitoring of the state of said electrical storage device and detection of an abnormal state of said electrical storage device, and **in that** said first abnormality detection section executes monitoring of the state of said electrical storage device and detection of an abnormal state of said electrical storage device during normal operation of said electrical storage device.

6. The power supply system according to Claim 3 or Claim 4, **characterized in that** said power supply system further comprises an open/close section which can disconnect the electrical connection between said electrical storage device and said power supply system, and **in that** said controller further comprises an open/close execution section which causes execution of disconnection of the electrical connection between said electrical storage device and said power supply system by said open/close section after a prescribed time has elapsed upon acquisition of said disaster information.

7. A power supply control method of a power supply system that has an electrical storage device which, at the time of stoppage of a power supply for supplying electric power to a load device, supplies power to said load device in place of said power supply, and that controls the supply of power from said electrical storage device to said load device by monitoring a state of said electrical storage device and detecting an abnormal state of said electrical storage device, the method comprising the steps of:
monitoring the state of said electrical storage device with a first monitoring period to monitor the state of said electrical storage device, and detecting an abnormal state of said electrical storage device during normal operation of said power supply; and
monitoring the state of said electrical storage device with a second monitoring period shorter than said first monitoring period, and detecting an abnormal state of said electrical storage device upon acquisition of disaster information predicting stoppage of said power supply.

8. A power supply control program of a power supply system that has an electrical storage device which, at the time of stoppage of a power supply for supplying electric power to a load device, supplies power to said load device in place of said power supply, and that controls the supply of power from said electrical storage device to said load device by monitoring a state of said electrical storage device and detecting an abnormal state of said electrical storage device, the program causing a computer to function as:
an information acquisition section which acquires disaster information predicting stoppage of said power supply; and
an abnormality detection section which monitors the state of said electrical storage device with a monitoring period for monitoring the state of the electrical storage device, and detects an abnormal state of said electrical storage device, and **characterized in that**
said abnormality detection section performs monitoring with a first monitoring period during normal operation of said power supply, and performs monitoring with a second monitoring period shorter than said first monitoring period when said disaster information is acquired.
